# EUROPEAN PATENT APPLICATION

(11) **EP 4 462 923 A1**
(43) Date of publication of application: **13.11.2024**
(21) Application number: 24172072.1
(22) Date of filing: 24.04.2024
(51) Int. Cl.: H04W 72/1268, H04W 72/21, H04W 72/23, H04W 72/52, H04W 74/00

(54) **A METHOD TO REDUCE UPLINK OVER-THE-AIR LATENCY IN CELLULAR SYSTEMS**

(30) Priority: 26.04.2023 US 202363498314 P; 22.04.2024 US 202418641634
(71) Applicant: Mavenir Systems, Inc., Richardson, TX 75081 (US)
(72) Inventor: LEELAHAKRIENGKRAI, Rangsan, Allen, 75013 (US)
(74) Representative: Studio Torta S.p.A.

(57) **Abstract**

A method of operating a wireless cellular communication system includes: operating one of an eNB or gNB communicating with a set of user equipments (UEs); and scheduling, using a scheduler, uplink (UL) auto-grants to the set of the UEs when selected resources are available, the selected resources including Physical Downlink Control Channel (PDCCH) resource, Physical Uplink Shared Channel (PUSCH) resource and scheduler capacity. The scheduler determines at least two UEs in RRC-connected mode and having zero UL buffer count, at least one of the two UEs with downlink (DL) traffic present and at least one of the two UEs without DL traffic present. The scheduler selects a set of RRC-connected UEs with zero UL buffer count for which UL auto-grants can be scheduled with a designated number of physical resource blocks (PRBs) and designated Modulation and Coding Scheme (MCS).

## Description

### BACKGROUND OF THE DISCLOSURE

### 1. Field of the Disclosure

The present disclosure relates to radio access network (RAN) configuration for 4G and 5G based cellular systems, and relates more particularly to systems and methods to reduce uplink latency over the air in RANs of 4G and 5G cellular systems.

### 2. Description of the Related Art

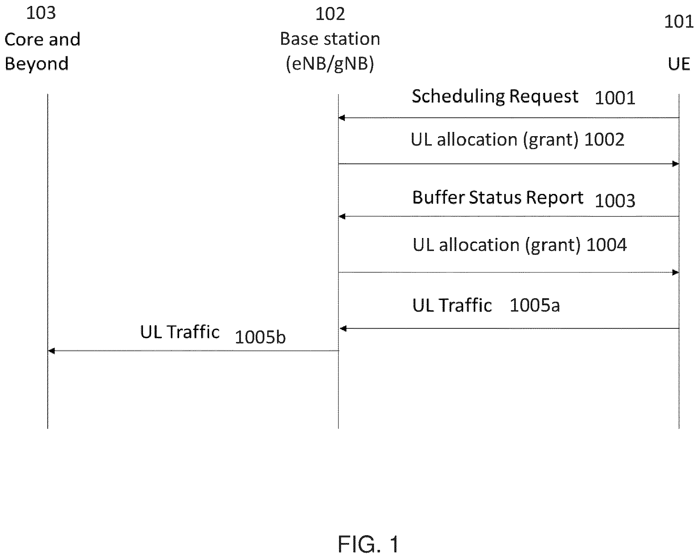

In 4G and 5G RANs, an active user equipment (UE) (i.e., UE 101 shown in FIG. 1, in Radio Resource Control (RRC)-connected state) sends Scheduling Request (SR) (shown by the reference 1001 in FIG. 1, which illustrates an example 4G/5G procedure for a UE to request an uplink (UL) grant) to the eNodeB (eNB) or gNodeB (gNB) (commonly referenced in the present disclosure as base station 102 in FIG. 1 for the sake of simplicity, i.e., could be either eNB or gNB) to indicate that it needs uplink (UL) allocation. The opportunity to send SR is periodic (i.e., SR periodicity), which periodicity is fixed by the eNB/gNB. Once the eNB/gNB (base station 102) receives the SR, it sends a UL allocation (referenced by 1002 in FIG. 1) to the UE, which in turn attaches a Buffer Status Report (BSR) (referenced by 1003 in FIG. 1) and transmit it back to the eNB/gNB (base station 102). The eNB/gNB (base station 102) then sends another UL allocation (referenced by 1004 in FIG. 1) to the UE 101, which in turn uses the allocation to transmit to the base station 102 (as shown by 1005a) all or part of the bits in its buffer, which transmission is relayed by the base station 102 (as shown by 1005b) to the core and beyond (which is generally referenced as 103). This SR is needed if there is no on-going traffic in the UL. Otherwise, the UE can attach BSR at the end of the data bits. The full process takes between 30-50 ms, depending on the SR periodicity, eNB/gNB scheduling load (how many other UEs it needs to schedule), and time between the eNB/gNB UL schedule and time the UE can transmit the UL data (parameter K2 in 5G, or fixed 4 ms in 4G).

One conventional approach for attempting to solve the problem of reducing uplink latency is to predict when the UE will have data in its buffer, and send the scheduling grant accordingly. This prediction is very difficult because the UE implements a variety of applications, each having its own traffic characteristics. Therefore, this prediction is often unreliable, often resulting in wasteful grants.

Another conventional approach for attempting to solve the problem of reducing uplink latency is to send the proactive grant all the time to all UEs. This approach is also wasteful if eNB/gNB resource check is not performed before sending the grant, because the grant could have been used by a UE with actual traffic.

Therefore, a need exists to provide a system and a method for a more efficient reduction of UL latency over the air.

### SUMMARY OF THE DISCLOSURE

The present disclosure provides a system and a method for a more efficient reduction of UL latency over the air.

According to an example embodiment, a UL grant is sent to the zero-buffer UEs only after active UEs (i.e., UEs with non-zero buffer) have been served and available resources remain.

According to an example embodiment, a cellular communication system comprising a base station (eNB or gNB) for serving a UE is provided, which system implements a method to reduce UL latency over the air, by having a UL grant sent to the zero-buffer UEs only after active UEs (i.e., UEs with non-zero buffer) have been served and available resources remain.

According to an example embodiment, the base station (eNB/gNB) schedules UL allocations to a set of RRC-connected UEs that have zero BSR, each with a number of over-the-air resource (i.e., Physical Resource Blocks (PRBs)) and a Modulation and Coding Rate (MCS), only i) after the base station (eNB/gNB) has scheduled other higher priority UEs and UEs with non-zero buffers, and ii) if there is enough Physical Downlink Control Channel (PDCCH) and Physical Uplink Shared Channel (PUSCH) resources and scheduler capacity are available.

### BRIEF DESCRIPTION OF THE DRAWINGS

FIG. 1 is a signal flow diagram illustrating an example 4G/5G procedure for a UE to request an uplink (UL) grant.
FIG. 2 is a flowchart of an example method for reducing the UL latency.
FIG. 3 is a signal flow diagram illustrating a portion of an example method for reducing the UL latency.

### DETAILED DESCRIPTION

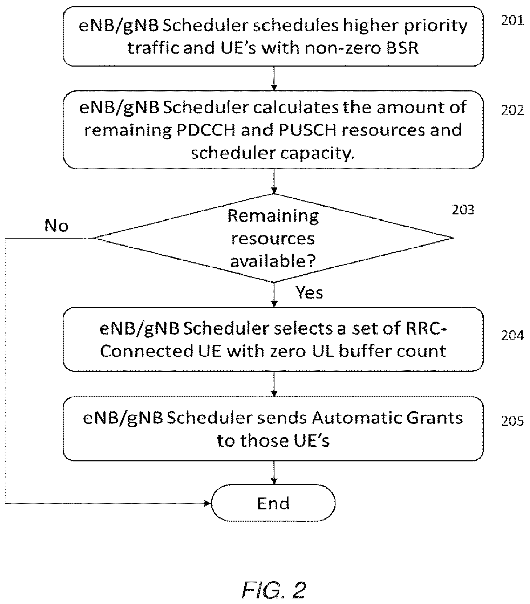

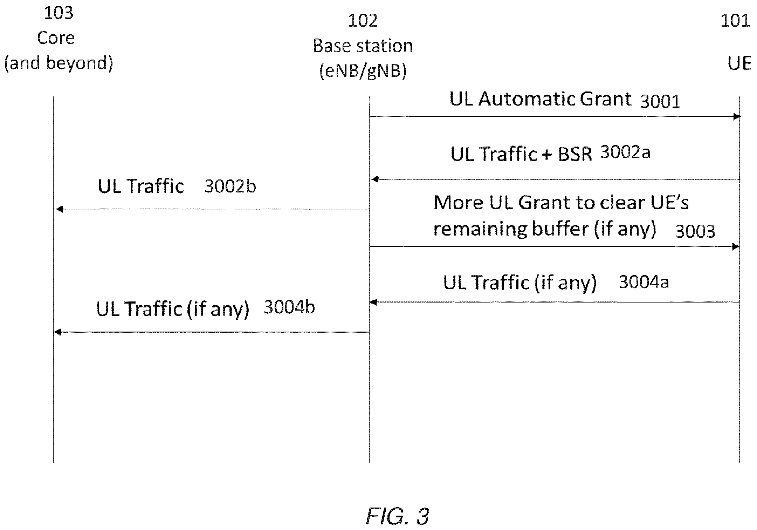

According to an example embodiment, a cellular communication system comprising a base station (eNB or gNB) for serving a UE is provided, which system implements a method to reduce UL latency over the air, by having a UL grant sent to the zero-buffer UEs only after active UEs (i.e., UEs with non-zero buffer) have been served and available resources remain. The example embodiment will be described in further detail in connection with FIGS. 2 and 3.

According to the example embodiment of the method illustrated in FIG. 2, in block 201, the eNB/gNB Scheduler schedules higher priority traffic (e.g., signaling) and UEs with non-zero buffers (as reflected by non-zero BSR) first, thereby ensuring that there is no impact to the committed traffic. In block 202, the eNB/gNB Scheduler calculates the amount of Physical Downlink Control Channel (PDCCH) and Physical Uplink Shared Channel (PUSCH) resources and scheduler capacity remaining after serving the committed (i.e., higher priority ) traffic. The scheduler capacity can be expressed as the number of UEs that can be scheduled in a subframe/slot. In block 203, a determination is made whether there are remaining resources available (must have all three resource types, including PDCCH, PUSCH and scheduler). If there are remaining resources available (i.e., the decision block follows "YES"), then the eNB/gNB Scheduler can select, in block 204, a set of RRC-connected UEs that have zero UL buffer count (i.e., zero BSR) that can be sent UL allocations. Otherwise, i.e., there are no remaining resources, the Scheduler stops and moves on to the next subframe/slot.

In one variation of the example embodiment, the eNB/gNB Scheduler can i) put all RRC-connected UEs with zero UL buffer count (determined by last BSR) in a queue, and ii) select a set of the UEs from the head of the queue that can be scheduled with the remaining resources. In another variation of the example embodiment, the eNB/gNB Scheduler can put RRC-connected UEs with zero UL buffer count and DL traffic present in a high priority queue, while placing those without DL traffic present in a low priority queue. Then, the eNB/gNB Scheduler can server those UEs in the high priority queue first. This is beneficial in the case the DL traffic uses Transmission Control Protocol (TCP), because TCP Acknowledgment (TCP ACK) is transmitted in the UL, and the faster the TCP ACK, the more TCP will increase the offered bit rate.

Continuing with FIG. 2, in block 205, the eNB/gNB Scheduler assigns the UL allocations, called Automatic Grants (or Auto-Grants), to the set of selected RRC-connected UEs with zero BSR. Then, the eNB/gNB Scheduler places those UEs in the back of the queue. If there are any UEs left in the queue unserved in the current subframe/slots, these UEs will be at the front of the queue in the next subframe/slot, thereby ensuring that the eNB/gNB Scheduler can cycle through all the UEs.

FIG. 3 is a signal flow diagram illustrating the portion of the example method after the eNB/gNB Scheduler has selected a set of RRC-Connected UEs. At this point, the eNB/gNB Scheduler (which in this example is assumed to be a part of the base station 102) sends the proactive grant, i.e., UL automatic grant 3001, to the UE 101. In this example, let's assume that the UE 101 has UL traffic to transmit, so the UE 101 transmits the UL traffic along with the BSR, as shown by the process arrow 3002a. The base station 102 (eNB/gNB) forwards the UL traffic to the core (and beyond) 103, as referenced by the process arrow 3002b. The base station 102 (eNB/gNB) sends (as referenced by the process arrow 3003) additional grant to the UE 101 to clear the UE's remaining buffer according to previously received BSR indicating non-zero buffer (if the previously received BSR indicates zero value, i.e., there is no more bits in the UE's buffer, then the eNB/gNB does not need to send additional grant to the UE). The UE 101 transmits the remining UL traffic (as referenced by the process arrow 3004a), and the base station 102 (eNB/gNB) forwards the UL traffic to the core (and beyond) 103, as referenced by the process arrow 3004b. This is the end of the procedure for the current slot, and the process continues as outlined in the flowchart of FIG. 2 in the next slot.

It should be noted that each allocation (UL grant) is assigned with PDCCH resources (control channel elements (CCEs)), PUSCH resources (PRBs) and Modulation and Coding Rate (MCS) used for those PRBs. In one example embodiment, the assigned PDCCH resources (CCEs) can be determined by the UE's UL channel condition, which can be indicated by the Sounding Reference Signal (SRS).

In one example embodiment, the assigned PUSCH resources (PRBs) and Modulation and Coding Rate (MCS) can be calculated such that they can drain TCP ACK or a ping request (32 bytes). This is useful to speed up DL TCP traffic and UL ping testing.

If one or more UEs transmit data in the allocations, the eNB/gNB Scheduler schedules the UEs as active UEs, that is, treats them as committed traffic.

In one example embodiment, the eNB/gNB instructs the UEs not to transmit any zero-padding bits or BSR if the UE does not have any data in its buffer in the Auto-Grant. This ensures the UE does not create unnecessary interference to other cells.

The techniques described herein are exemplary and should not be construed as implying any limitation on the present disclosure. Various alternatives, combinations and modifications could be devised by those skilled in the art. For example, operations associated with the processes described herein can be performed in any order, unless otherwise specified or dictated by the operations themselves. In addition, although the example embodiments have been described in the context of 4G and 5G cellular systems, the present disclosure is applicable to any existing and/or future wireless systems that support 3GPP UL scheduling request procedure. The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms is provided:

### Acronyms

- BSR: Buffer Status Report
- CCE: Control Channel Element
- DL: Downlink
- eNB: evolved node B
- gNB: next generation node B
- LTE: Long Term Evolution (aka, 4G)
- MCS: Modulation and Coding Scheme
- NBIOT: Narrowband Internet of Things
- NPRACH: NBIOT PRACH
- NR: New Radio, aka 5G
- O-RAN: Open Radio Access Network
- PDCCH: physical downlink control channel
- PDCP: Packet Data Convergence Protocol
- PDSCH: Physical Downlink Shared Channel
- PRB: physical resource block
- PRACH: Physical random access channel
- PUSCH: Physical Uplink Shared Channel
- RACH: Random access channel
- RAN: Radio Access Network
- RB: resource block
- RAT: Radio access technology
- RE: Resource element
- RLC: Radio Link Control
- RRC: Radio Resource Control
- SR: Scheduling Request
- SRS: Sounding Reference Signal
- UE: user equipment

## Claims

1. A wireless cellular communication system, comprising:
one of an eNB or gNB communicating with a set of user equipments (UEs); and
a scheduler configured to schedule uplink (UL) auto-grants to the set of the UEs when selected resources are available, the selected resources including Physical Downlink Control Channel (PDCCH) resource, Physical Uplink Shared Channel (PUSCH) resource and scheduler capacity.

2. The system of claim 1, wherein the scheduler determines at least one UE in Radio Resource Control (RRC)-connected mode and having zero UL buffer count.

3. The system of claim 2, wherein the scheduler determines at least two UEs in RRC-connected mode and having zero UL buffer count, at least one of the two UEs with downlink (DL) traffic present and at least one of the two UEs without DL traffic present.

4. The system of claim 2, wherein the scheduler determines how much PDCCH resource, PUSCH resource and scheduler capacity is left in one of i) each subframe, in the case of a 4G system, or ii) each slot, in the case of a 5G system.

5. The system of claim 3, wherein the scheduler selects a set of RRC-connected UEs with zero UL buffer count for which UL auto-grants can be scheduled with a designated number of physical resource blocks (PRBs) and designated Modulation and Coding Scheme (MCS).

6. The system of claim 5, wherein the scheduler selects the UEs with DL traffic present first.

7. The system of claim 6, wherein at least one of:
i) the scheduler schedules UL auto-grants to the UEs with DL traffic present; and
ii) the one of the eNB or the gNB instructs the UEs not to transmit in the UL auto-grants if there is no real data in a buffer of the UEs.

8. The system of claim 3, wherein at least one of:
i) the scheduler schedules UL auto-grant to the at least one UE with DL traffic present; and
ii) the one of the eNB or the gNB instructs the UE not to transmit in the UL auto-grant if there is no real data in a buffer of the UE.

9. A method of operating a wireless cellular communication system, comprising:
operating one of an eNB or gNB communicating with a set of user equipments (UEs); and
scheduling, using a scheduler, uplink (UL) auto-grants to the set of the UEs when selected resources are available, the selected resources including Physical Downlink Control Channel (PDCCH) resource, Physical Uplink Shared Channel (PUSCH) resource and scheduler capacity.

10. The method of claim 9, wherein the scheduler determines at least one UE in Radio Resource Control (RRC)-connected mode and having zero UL buffer count.

11. The method of claim 10, wherein the scheduler determines at least two UEs in RRC-connected mode and having zero UL buffer count, at least one of the two UEs with downlink (DL) traffic present and at least one of the two UEs without DL traffic present.

12. The method of claim 10, wherein the scheduler determines how much PDCCH resource, PUSCH resource and scheduler capacity is left in one of i) each subframe, in the case of a 4G system, or ii) each slot, in the case of a 5G system.

13. The method of claim 11, wherein the scheduler selects a set of RRC-connected UEs with zero UL buffer count for which UL auto-grants can be scheduled with a designated number of physical resource blocks (PRBs) and designated Modulation and Coding Scheme (MCS).

14. The method of claim 13, wherein the scheduler selects the UEs with DL traffic present first.

15. The method of claim 14, wherein at least one of:
i) the scheduler schedules UL auto-grants to the UEs with DL traffic present; and ii) the one of the eNB or the gNB instructs the UEs not to transmit in the UL auto-grants if there is no real data in a buffer of the UEs.

16. The method of claim 11, wherein at least one of:
i) the scheduler schedules UL auto-grant to the at least one UE with DL traffic present; and
ii) the one of the eNB or the gNB instructs the UE not to transmit in the UL auto-grant if there is no real data in a buffer of the UE.
